Europäisches Patentamt

European Patent Office

Office européen des brevets

(11) Veröffentlichungsnummer : **0 180 800**
**B1**

# (12) EUROPÄISCHE PATENTSCHRIFT

(45) Veröffentlichungstag der Patentschrift :
03.01.90

(21) Anmeldenummer : 85112820.7

(22) Anmeldetag : 10.10.85

(51) Int. Cl.⁵ : **G 02 B 17/08**, G 02 B 19/00

(54) **Sonnensimulator.**

(30) Priorität : 11.10.84 DE 3437271

(43) Veröffentlichungstag der Anmeldung :
14.05.86 Patentblatt 86/20

(45) Bekanntmachung des Hinweises auf die Patenterteilung : 03.01.90 Patentblatt 90/01

(84) Benannte Vertragsstaaten :
DE FR GB IT

(56) Entgegenhaltungen :
DE--A-- 2 803 277
DE--A-- 3 300 811
DE--B-- 2 426 325
DE--C--   968 430
DE--U-- 1 721 435
FR--A-- 1 394 183
Applied Optics, vol. 9, n 5, (May 1970), Seiten 1068-1074

(73) Patentinhaber : **Firma Carl Zeiss**
**D-7920 Heidenheim (Brenz) (DE)**
**DE FR IT**
**CARL-ZEISS-STIFTUNG trading as CARL ZEISS**

**D-7920 Heidenheim (Brenz) (DE)**
**GB**

(72) Erfinder : **Hager, Karl-Heinz**
**Spechtweg 13**
**D-7920 Heidenheim-Schnaitheim (DE)**
Erfinder : **Henneberg, Peter, Dr.**
**Mantelhof 25**
**D-7080 Aalen (DE)**
Erfinder : **Juranek, Hans-Joachim, Dr.**
**Härtsfeldstrasse 2**
**D-7080 Aalen-Waldhausen (DE)**

## Beschreibung

Die Erfindung betrifft ein optisches System zur Übertragung von Strahlung hoher Intensität in eine Testebene. Solche optischen Systeme werden beispielsweise für sogenannte Sonnensimulatoren verwendet, d. h. Testeinrichtungen, in denen Raumflugkörper künstlich geschaffenen Weltraumbedingungen unterworfen werden, einschließlich eines der Sonnenstrahlung entsprechenden intensiven, einseitigen Strahlungsflusses.

Zur Erzeugung der nötigen hohen Strahlungsintensität verwendet man dabei eine Vielzahl aneinandergereihter Hochleistungslampen, die einen Lichtfluß entsprechend mehreren 100 kW Leistung liefern. Dieser Lichtfluß wird über eine Integratorbaugruppe bestehend aus einem Array nebeneinander angeordneter Feldlinsen und eine ebensolche Anordnung von Projektionslinsen und über einen im Inneren des evakuierten Testraums aufgestellten Kollimatorspiegel auf das zu testende Objekt gerichtet. Dabei ist der Kollimatorspiegel in der Regel so angeordnet, daß er das vom Integrator kommende Strahlungsbündel « Off-Axis », d. h. unter einem Winkel zu seiner Symmetrieachse reflektiert.

Ein Sonnensimulator mit diesem Aufbau ist z. B. in der DE-A1-33 00 811 beschrieben.

Bedingt durch diese Anordnung wird das nach dem Stand der Technik kreiskeglige Strahlungsbüschel, das den Integrator verläßt, durch den Kollimatorspiegel in ein Büschel mit elliptischem Querschnitt umgeformt. Im Testraum des Sonnensimulators sind jedoch in der Regel nur kreisförmige Querschnitte nutzbar. Das Licht außerhalb des in seiner Form vorgegebenen nutzbaren Bereiches der Testebene ist verloren und muß durch aufwendige Kühleinrichtungen beseitigt werden. Dieser Teil der Strahlung fehlt andererseits in der Testebene.

Aus der DE-C-968 430 ist eine Beleuchtungseinrichtung für Kinoprojektoren beschrieben, die ebenfalls ein Feldlinsen- und ein Projektionslinsenarray besitzt. Dort wird außerdem gelehrt, die Form der Feldlinse der Form des auzuleuchtenden Feldes anzupassen, und die Feldlinsen möglichst dicht zu packen, indem beispielsweise für rechteckige Bildfelder rechteckige Feldlinsen aneinandergereiht werden und für sechseckige Bildfelder die Feldlinsen wabenförmig angeordnet werden. Der Einfluß der Abbildungsfehler zusätzlicher optischer Bauteile im Strahlengang auf die Querschnittsform des Leuchtfeldes bleibt allerdings unberücksichtigt.

Weiterhin ist in Applied Optics, Vol. 9, No. 5 (Mai 1970) auf Seite 1068-1074 ein Sonnensimulator vom « Off-Axis-Typ » beschrieben. Aus der letztgenannten Literaturstelle geht außerdem hervor, daß die Querschnittsform des Strahlbündels durch eine entsprechende Formgebung der Fedlinsen des Arrays eingestellt werden kann. Für den bekannten Sonnensimulator werden u. a. Arrays aus sechseckigen Feldlinsen vorgeschlagen, die eine entsprechend sechseckige Querschnittsfigur des Strahlbündels in der Testebene ergeben. Es findet sich jedoch kein Hinweis darauf, daß die durch den Kollimatorspiegel verzerrte Abbildung der Feldlinsen in die Testebene durch eine entsprechende Formgebung der Feldlinsen kompensiert werden kann.

Es ist die Aufgabe der vorliegenden Erfindung, das optische System der eingangs genannten Art so auszubilden, daß möglichst keine Strahlung außerhalb des vorgegebenen, nutzbaren Bereichs der Testebene anfällt.

Diese Aufgabe wird gemäß den Merkmalen im Kennzeichen des Hauptanspruches dadurch gelöst, daß die Form der äußeren Umrandung der einzelnen Feldlinsen abweichend von der Kreisform so gewählt ist, daß unter Berücksichtigung der durch den Kollimatorspiegel eingeführten Verzeichnung die Querschnittsform des aus dem Kollimatorspiegel austretenden Strahlenbündels den vorgegebenen Abmessungen der Testebene entspricht.

Gemäß der Erfindung wird also die Form des auf die Testebene auftreffenden Strahlungsbündels allein durch eine geeignete Wahl für die äußere Umrandung der Feldlinsen des Integrators angepaßt. Möglich ist die Beeinflußung der Form des auf die Testebene auftreffenden Strahlkegels an dieser Stelle, weil die Feldlinsen in einer zur Testebene konjugierten Ebene angeordnet sind, ihre Fassungen also einer Blende entsprechen, die in die Testebene vergrößert abgebildet wird.

Die genaue Form der Umrandung läßt sich stets durch eine einfache Rechnung aus dem Krümmungsradius des Kollimatorspiegels, seiner Entfernung von Testebene und Integrator und dem Winkel zwischen seiner Achse und der des einfallenden Strahlungsbündels ermitteln. Beispielsweise wird für die Umrandung der Feldlinsen eine elliptische Form gewählt, wenn die vorgegebene Form der Testebene einen Kreis darstellt. Die längeren Achsen der Ellipse liegen dabei in der Ebene, die von den Achsen des auf den kollimatorspiegel einfallenden und reflektierten Strahlenbündels aufgespannt wird.

Auch wenn für die Testebene eine andere Form vorgegeben ist, beispielsweise eine quadratische Form, läßt sich der Querschnitt des aus dem Kollimatorspiegel austretenden Büschels daran anpassen. Es ist dann eine kissenförmige Umrandung der Feldlinien vorzusehen.

Die Form der Umrandung der Projektionslinsen, die bei Systemen der eingangs genannten Art den Feldlinsen nachgeschaltet sind, ist zweckmäßigerweise der der Feldlinsen angepaßt, um Lichtverluste in dem aus Feld- und Projektionslinsen bestehenden Integrator möglichst gering zu halten.

Der mit der Erfindung erzielbare Vorteil ist in erster Linie darin zu sehen, daß in der Testebene nur dort Strahlung angeboten wird, wo sie auch benötigt wird. Aufwendige Kühleinrichtungen im Testraum selbst zur Vernichtung nicht benötigter Strahlungsanteile entfallen deshalb. Entsprechend ist der Wirkungsgrad eines gemäß der Erfindung aufgebauten Sonnensimulators verglichen mit einem nach dem Stand der Technik deutlich besser. Unter Wirkungsgrad wird der Quotient von eingespeister elektrischer Lampenleistung zu nutzbarer Lichtleistung in der Testebene verstanden.

Ein weiterer Vorteil ist in der konstruktiven Unkompliziertheit der erfindungsgemäßen Lösung zu sehen, da keine zusätzlichen optischen Flächen eingeführt werden müssen, an denen zusätzliche Lichtverluste entstehen würden. Eingriffe am Kollimatorspiegel, der wegen seiner Größe und Stellung im evakuierten Inneren des Testraums ein kritisches und teures Bauelement darstellt, sind ebendalls nicht erforderlich.

Nachstehend wird ein Ausführungsbeispiel der vorliegenden Erfindung anhand der Figuren 1-4 der beigefügten Zeichnungen näher erläutert :

Fig. 1 ist eine Prinzipskizze eines Sonnensimulators vom Off-Axis-Typ ;

Fig. 2 skizziert den Strahlengang in dem optischen System des Sonnensimulators nach Fig. 1 im Hauptschnitt ;

Fig. 3 ist eine im vergrößerten Maßstab dargestellte Detailzeichnung der Integratorbaugruppe 9 aus Fig. 2 ;

Fig. 4 ist die Ansicht einer Hälfte der Feldlinsenanordnung des in Fig. 3 dargestellten Integrators.

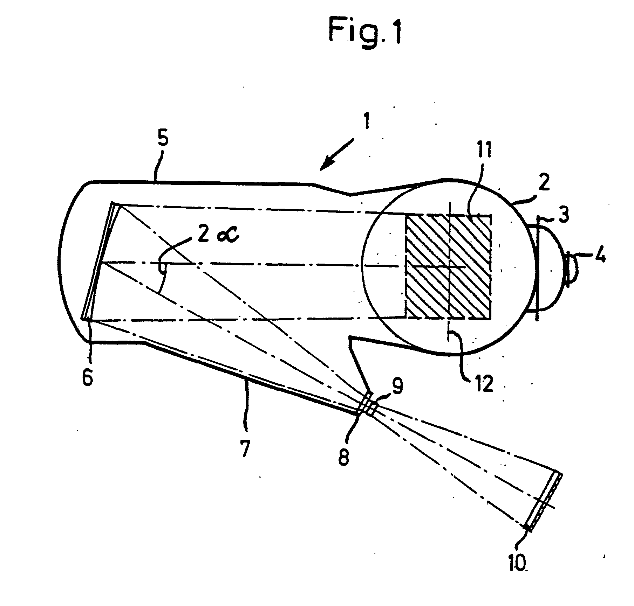

Der in Fig. 1 dargestellte Sonnensimulator 1 besitzt ein im wesentlichen aus zwei aneinandergesetzten zylindrischen Tanks 2 und 5 aufgebautes Gehäuse. Der senkrechte stehende Tank 2 ist mit vakuumdicht verschließbaren Einstiegsöffnungen 3 und 4 versehen, über die der Testraum zugänglich ist. Dort, im Tank 2, befindet sich das schraffiert gezeichnete Testvolumen 11, in dem der zu prüfende Gegenstand plaziert wird. Das Testvolumen 11 hat die Form eines liegenden Zylinders, das sich symmetrisch beiderseits der kreisrunden Testebene 12 erstreckt.

Der waagerecht liegende Tank 5 besitzt seitlich ein konisches Anschlußstück 7, dessen Stirnseite ein vakuumdichtes Strahlungsfenster 8 trägt. Im inneren des Tanks 5 ist weiterhin ein Kollimatorspiegel 6 angeordnet, der die durch das Fenster 8 hindurchtretende Strahlung unter einem Winkel 2 α auf die Testebene 12 reflektiert.

Zur Erzeugung des für die Simulation der Sonnenstrahlung nötigen intensiven Lichtflußes sind außerhalb des Vakuumbehälters 2/5 eine Vielzahl einzelner, zu einem Lampenarray 10 zusammengefaßte Xenon-Hochdrucklampen angeordnet. Deren Strahlung wird durch eine Integratorbaugruppe 9 aus Feld- und Projektionslinsen in unmittelbarer Nähe des Strahlungsfensters 8 gebündelt.

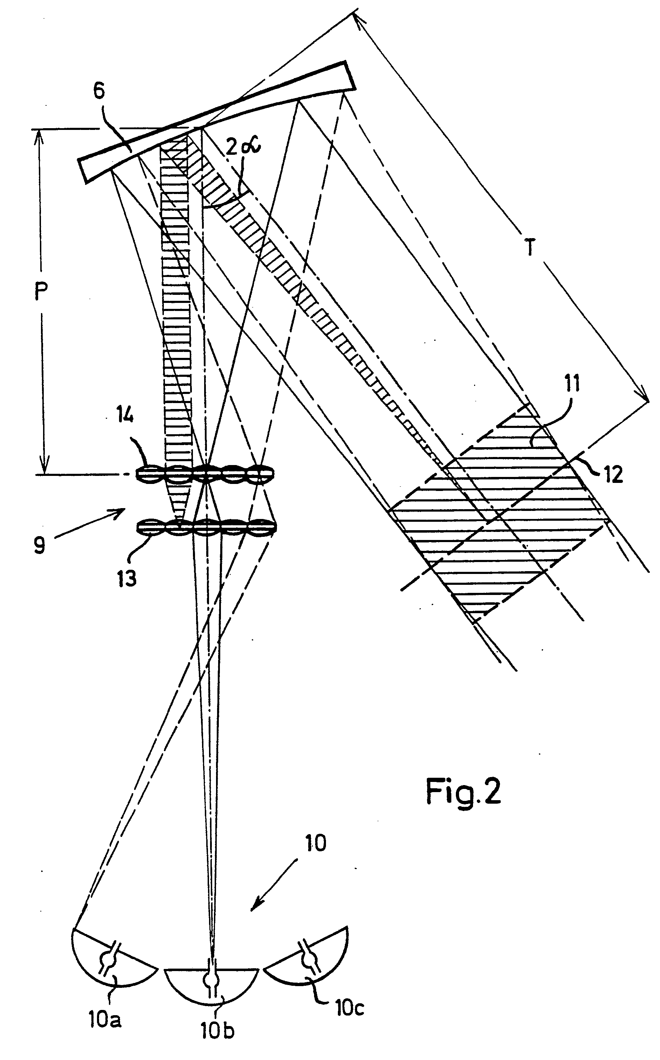

In Fig. 2 ist die Optik, mit deren Hilfe das Licht der Xenon-Hochdrucklampen in die Testebene 12 bzw. das Testvolumen 11 übertragen wird, im Hauptschnitt detaillierter dargestellt. Daraus ist ersichtlich, daß die Integratorbaugruppe 9 zwischen dem Lampenarray 10 und dem Kollimatorspiegel 6 aus zwei hintereinander angeordneten, separaten Linsenarrays, einem Feldlinsenarray 13 und einem Projektionslinsenarray 14, besteht, wobei jedes Array 13 und 14 eine Vielzahl neben- und übereinander angeordnete Einzellinsen enthält. Jede Linse des Feldlinsenarrays 13 bildet das gesamte Lampenarray 10 in jeweils eine Linse des Projektionslinsenarrays 14 ab, während jede Projektionslinse des Arrays 14 jeweils eine ihr zugeordnete Feldlinse in Verbindung mit dem Kollimatorspiegel 6 in die Testebene 12 abbildet.

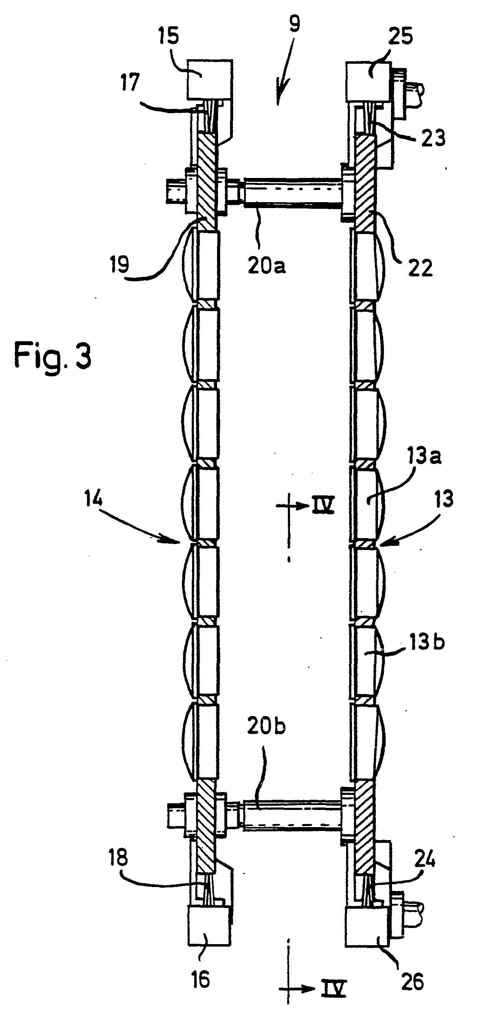

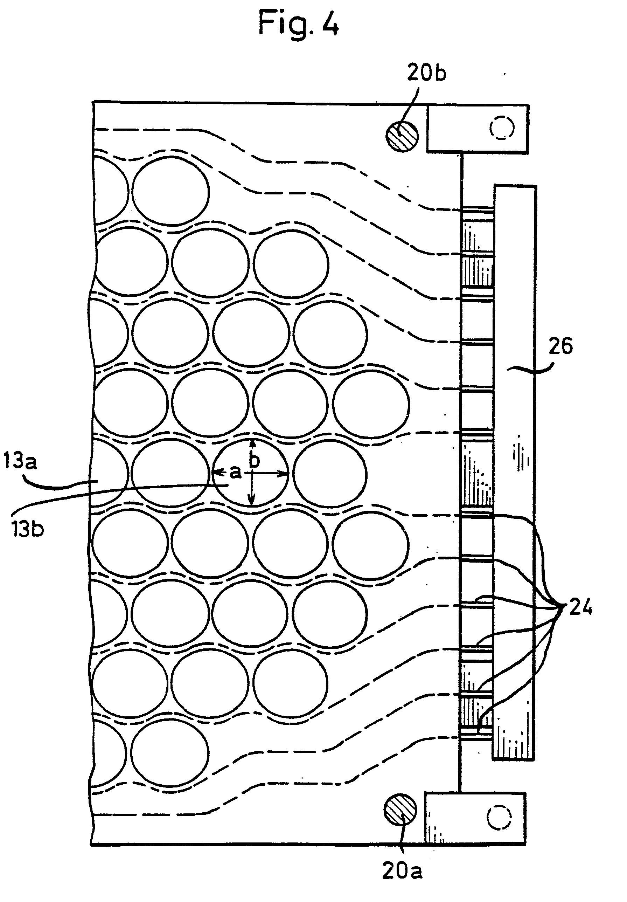

In den Figuren 3 und 4 ist die Integratorbaugruppe 9 detaillierter dargestellt. Danach sind jeweils fündundzwanzig Feldlinsen 13 und fünfundzwanzig Integratorlinsen 14 in dichter Packung in je eine als Linsenhalter ausgebildete, rechteckige Platte 22 bzw. 19 eingesetzt. Die beiden Platten 19 und 22 werden von vier Bolzen 20a-d auf Abstand gehalten. Zwischen den Linsen sind die Platten 19 und 22 von Kühlkanälen durchzogen, die von jeweils zwei beiderseits der Platten 19 und 22 angeordneten Verteilerkästen 15 und 16 bzw. 25 und 26 über Anschlußrohre 17/18 bzw. 23/24 gespeist werden. Mit diesen Kühlkanälen wird die durch Absoprtion von Licht in den Linsen des Arrays 13 und 14 und deren Fassung entstehende Wärme abgeführt. Aus der Fig. 3 ist ebenfalls ersichtlich, daß die Feldlinsen des Arrays 13 abhängig von ihrer Stellung in Bezug auf die zentrisch angeordnete Linse 13a gegen den Rand des Arrays 13 hin mit einer prismatischen Wirkung versehen sind.

Wie bereits erwähnt trifft das von der Integratorbaugruppe 9 ausgehende Strahlungsbüschel unter einem Winkel α auf die Achse des Kollimatorspiegels 6 auf und wird an diesem in seiner Querschnittsform verzerrt. Dieser Verzeichnungsfehler ist abhängig vom Einfallswinkel α auf den Spiegel sowie dessen Krümmungsradius r und seinem Abstand P vom Integrator (Projektionsweite) und seinem Abstand T von der Testebene (Target-distanz). Da die Querschnitte der Feldlinsen des Arrays 13 nach dem Stand der Technik kreisförmig sind, führt dieser Verzeichnungsfehler dazu, daß der Büschelquerschnitt in der Testebene 12 ellipsenförmig verzerrt ist, wobei für das Achsverhältnis V der Ellipse gilt :

$$V = \frac{a'}{b'} = \frac{1 - T\left(\dfrac{2\cos\alpha}{r} - \dfrac{1}{P}\right)}{1 - T\left(\dfrac{2}{r\cos\alpha} - \dfrac{1}{P}\right)} \qquad (1)$$

Um einen kreisförmigen Querschnitt des auf die Testebene 12 auftretenden Strahlungsbündel zu erzielen, ist gemäß der Erfindung die Umrandung aller Feldlinsen des Arrays 13 elliptisch geformt. Dies geht aus Fig. 4 hervor, in der die Pfeile a und b, beispielhaft nur für die Feldlinse 13b eingezeichnet, auf die unterschiedliche Länge der beiden Achsen der elliptisch geformten Feldlinsen hindeuten. Die längere Achse a liegt dabei in der Ebene, die durch das auf den Spiegel 6 auffallende und das vom Spiegel 6 reflektierte Bündel aufgespannt werden.

In dem hier dargestellten, bevorzugten Ausführungsbeispiel sind für den Einfallswinkel $\alpha$ des auf den Kollimatorspiegel einfallenden Strahlungsbündels, den Krümmungsradius r des Kollimatorspiegels und für Target-distanz T und Projektionsweite P folgende Werte gewählt:

$\alpha = 29°$

$r = 30\,m$

$P = 17\,m$

$T = 14,667\,m$

Daraus resultiert gemäß (1) ein Verzeichnungsfehler von 7,5 %. Entsprechend ist das Achsverhältnis der ellipsenförmigen Umrandung der Feldlinsen des Arrays 13 zu $a:b = 1,075$ gewählt, um den Verzeichnungsfehler zu kompensieren und es ergibt sich ein kreisrunder Querschnitt des auf die Testebene 12 auftreffenden Strahlungsbündels.

## Patentansprüche

1. Optisches System zur Übertragung von Strahlung hoher Intensität von einer Lichtquelle (10) in eine Testebene (12) mit vorgegebenen Abmessungen, z. B. in den Testraum eines sogenannten Sonnensimulators (1), mit einer Integratorbaugruppe (9) und einem Kollimatorspiegel (6), der das vom Integrator (9) kommende, auf ihn einfallende Licht unter einem Winkel (2 $\alpha$) reflektiert, wobei die Integratorbaugruppe (9) zwischen der Lichtquelle (10) und dem Kollimatorspiegel (6) aus einem Feldlinsenarray (13) und einem Projektionslinsenarray (14) besteht, jedes Array (13, 14) eine Vielzahl neben- und übereinander angeordneter Einzellinsen enthält und jede Linse des Feldlinsenarrays (13) die Lichtquelle (10) in jeweils eine Linse des Projektionslinsenarrays (14) abbildet, während jede Projektionslinse des Arrays (14) jeweils eine ihr zugeordnete Feldlinse in Verbindung mit dem Kollimatorspiegel (6) in die Testebene (12) abbildet, dadurch gekennzeichnet, daß die Form der äußeren Umrandung der einzelnen Feldlinsen (13) abweichend von der Kreisform so gewählt ist, daß unter Berücksichtigung der durch den Kollimatorspiegel (6) eingeführten Verzeichnung die Querschnittsform des aus dem Kollimatorspiegel austretenden Strahlenbündels dem vorgegebenen Abmessungen der Testebene (12) entspricht.

2. Optisches System nach Anspruch 1, dadurch gekennzeichnet, daß bei vorgegebener kreisrunder Form der Testebene (12) die Umrandung der Feldlinsen (13) elliptisch gewählt ist.

3. Optisches System nach Anspruch 1, dadurch gekennzeichnet, daß bei vorgegebener quadratischer oder rechteckiger Form der Testebene die Umrandung der Feldlinsen kissenförmig ist.

4. Optisches System nach Anspruch 1, dadurch gekennzeichnet, daß die Anzahl und die Form der äußeren Umrandung der Projektionslinsen (14) denen der ihnen vorgeschalteten Feldlinsen (13) entspricht.

## Claims

1. An optical arrangement for transmitting high-intensity radiation from a light source (10) into a test plane (12) of predetermined dimensions such as a test chamber of a sun simulator (1) or the like, the arrangement comprising an integrator assembly (9) and a collimator mirror (6) for reflecting the impinging radiation transmitted by said integrator assembly (9) at an angle (2 $\alpha$), wherein the integrator assembly (9) is located between the light source (10) and the collimator mirror (6) and consists of an array (13) of field lenses and an array (14) of projection lenses, and wherein each array (13, 14) comprises a plurality of single lenses arranged one beneath and above the other, and wherein each lens of the beneath and above the other, and wherein each lens of the array (13) of field lenses images the light source into a respective lens of the array (14) of projection lenses, whereas each projection lens of the array (14) together with the collimator mirror (6), images the respective field lens into the test plane, characterized by the fact that the outer periphery each of said field lenses (13) is selected to deviate from a circle and to take account of the distortion introduced by the collimator mirror (6) so as to impart a cross-section to the beam reflected by the collimator mirror that corresponds to the predetermind dimensions of the test plane (12).

2. The optical arrangement of claim 1, characterized by the fact that the test plane (12) is cirular and the periphery of the field lenses (13) is selected so as to be elliptical.

3. The optical arrangement of claim 1, characterized by the fact that the test plane is quadrilateral or rectangular and the outer periphery of the field lenses is pincushion shaped.

4. The optical arrangement of claim 1, characterized by the fact that number and the shape of the outer periphery of the projection lenses (14) corresponds to respective ones of the field lenses (13) mounted in front of the projection lenses.

**Revendication**

1. Système optique pour la transmission d'un rayonnement de haute intensité depuis une source lumineuse (10) dans un plan d'essais (12) ayant des dimensions préfixées, par exemple dans l'espace d'essais de ce que l'on appelle un simulateur solaire (1), comprenant un ensemble intégrateur (9) et un miroir collimateur (6) qui réfléchit sous un angle (2 α) la lumière incidente venant de l'intégrateur (9), l'ensemble intégrateur (9), placé entre la source lumineuse (10) et le miroir collimateur (6), étant composé d'un système de lentilles de champ (13) et d'un système de lentilles de projection (14), chaque système (13, 14) contenant un grand nombre de lentilles individuelles juxtaposées et superposées et chaque lentille du système de lentilles de champ (13) reproduisant la source lumineuse (10) dans une lentille du système de lentilles de projection (14), tandis que chaque lentille de projection du système (14) reproduit une lentille de champ qui lui est coordonnée, en liaison avec le miroir collimateur (6), dans le plan d'essais (12), caractérisé en ce que la forme non circulaire du bord extérieur des différentes lentilles de champ (13) est choisie de manière que, compte tenu de la déformation introduite par le miroir collimateur (6), la forme en section du faisceau issu du miroir collimateur corresponde aux dimensions préfixées du plan d'essais (12).

2. Système optique selon la revendication 1, caractérisé en ce que, pour une forme circulaire préfixée du plan d'essais (12), on choisi une forme elliptique du bord des lentilles de champ (13).

3. Système optique selon la revendication 1, caractérisé en ce que, pour une forme carrée ou rectangulaire préfixée du plan d'essais, le bord des lentilles de champ est en forme de coussin.

4. Système optique selon la revendication 1, caractérisé en ce que le nombre et la forme du bord extérieur des lentilles de projection (14) correspondent à ceux des lentilles de champ (13) qui les précédent.

# Fig.1

Fig.2

Fig. 3

# Fig. 4

20b

26

13a

13b

a
b

24

20a